# EUROPÄISCHE PATENTSCHRIFT

(11) **EP 1 112 879 B1**
(45) Veröffentlichungstag und Bekanntmachung des Hinweises auf die Patenterteilung: **11.02.2009**
(21) Anmeldenummer: 00126919.0
(22) Anmeldetag: 08.12.2000
(51) Int. Cl.: B60J 7/14

(54) **Umwandelbares Fahrzeugdach**
Convertible vehicle roof
Toit de véhicule convertible

(30) Priorität: 30.12.1999 DE 19964029
(43) Veröffentlichungstag der Anmeldung: 04.07.2001
(73) Patentinhaber: Webasto AG, 82131 Stockdorf (DE)
(72) Erfinder: Miklosi, Stefan, 81247 München (DE); Schütt, Thomas, 82256 Fürstenfeldbruck (DE)
(74) Vertreter: Konnerth, Dieter Hans

(56) Entgegenhaltungen:
- EP-A- 0 835 778
- DE-A- 4 316 485
- DE-A- 19 639 504
- DE-C- 4 435 222
- DE-C- 19 805 477

## Beschreibung

Die Erfindung betrifft ein umwandelbares Fahrzeugdach mit einem vorderen Dachelement und einem hinteren Heckelement, bei dem das vordere Dachelement mittels einer Hebeleinrichtung an der Karosserie schwenkbar gelagert ist und das Heckelement über das vordere Dachelement schwenkbar und gemeinsam mit diesem in einen rückwärtigen Stauraum absenkbar ist.

Aus der DE 44 35 222 C1 ist ein derartiges gattungsgemäßes Fahrzeugdach mit einem vorderen Dachelement und einem hinteren Heckelement bekannt geworden. Das Dachelement, das über schwenkbar angelenkte Dachlenker am Windlauf verriegelbar ist, ist mittels eines Schwenkhebels an der Karosserie schwenkbar angelenkt. Das Heckelement, das sich an das Dachelement nach hinten anschließt und dichtend auf einer Verdeckkastenklappe aufsitzt, die den Übergang zum Kofferraum bildet, ist über einen an der Karosserie gelagerten Schwenkhebel, der mittels eines Hydraulikzylinders schwenkbar ist und über einen weiteren Hydraulikzylinder an einem hinteren Anlenkpunkt des Heckelements mit diesem gekoppelt ist, sowie mit einem zusätzlichen Hydraulikzylinder und einer dazu parallelen Teleskopführung, die einerseits am Schwenkhebel befestigt sind und andererseits an dem Heckelement an einem vorderen Anlenkpunkt angreifen, derart bewegbar gelagert, daß es durch Verschwenken und Betätigen der Hebel- und Hydraulikzylindereinrichtungen aus seiner Schließstellung von der Verdeckkastenklappe abgehoben und nach vorne über das Dachelement verschwenkt werden kann. Dann wird das Heckelement an dem Dachelement verriegelt und nach Entriegeln der Dachlenker und durch Betätigen der Hebel- und Hydraulikzylindereinrichtungen wird es als Einheit mit dem Dachelement nach hinten in einen Stauraum verschwenkt und darin abgelegt. Das Dachelement verschwenkt dabei entsprechend der Führung durch seinen Schwenklenker sowie durch die Hebel- und Hydraulikzylindereinrichtungen des Heckelements. Diese Anordnung der Hebel- und Hydraulikzylindereinrichtungen erfordert jedoch in der Verdeckkastenklappe eine seitliche längliche Ausnehmung für den Durchtritt der Hebel- und Hydraulikzylindereinrichtungen.

Der Erfindung liegt die Aufgabe zugrunde, das eingangs genannte Fahrzeugdach mit einem vereinfachten und verbesserten Ablagemechanismus auszubilden.

Die Aufgabe wird bei dem oben genannten Fahrzeugdach erfindungsgemäß dadurch gelöst, daß das Heckelement an dem Dachelement und/oder der Hebeleinrichtung schwenkbar gelagert ist. Durch diese Gestaltung entfällt eine direkte Hebelverbindung zwischen dem Heckelement und der Karosserie, so daß bei hochgeschwenktem Heckelement während des Öffnens des Daches eine Verdeckkastenabdeckung ungehindert von Hebeln und Lenkern, wie sie bei dem oben genannten bekannten Fahrzeugdach zum Schwenklagern des Heckelements vorgesehen sind, hochgeschwenkt werden kann, um den Stauraum für das Fahrzeugdach zu öffnen. Das vordere Dachelement kann auch in zwei oder mehrere Elemente unterteilt sein, die miteinander gekoppelt sind und gemeinsam mittels der Hebeleinrichtung ablegbar sind.

Vorteilhafte Ausgestaltungen der Erfindung sind in den Unteransprüchen angegeben.

Bevorzugt enthält die das Dachelement lagernde Hebeleinrichtung zwei einen Viergelenkmechanismus bildende Hebel. In Abhängigkeit von den gewählten Positionen der Gelenke der beiden Hebel kann auf einfache Weise die Schwenkbewegung des Dachelementes vorgegeben und eingestellt werden.

Vorzugsweise ist auch das Heckelement mittels einer Hebeleinrichtung gelagert, die insbesondere zwei einen Viergelenkmechanismus bildende Lenker aufweist.

Wenn der eine Lenker des Heckelements am Dachelement und der andere Lenker an einem der beiden das Dachelement lagernden Hebel angelenkt ist, so kann durch die Relativbewegung dieses Hebels ein spezifisches Bewegungsverhalten des Heckelements beim Ablegen des Fahrzeugdaches eingestellt werden. Jedoch können auch beide Lenker am Dachelement oder an einem der Hebel oder jeweils ein Lenker an einem der Hebel angelenkt sein. Zumindest einer der Lenker kann in diesen Fällen eine Hydraulikzylindereinrichtung enthalten oder als eine solche gebildet sein, um eine Längenänderung für die Schwenkbewegung bewirken zu können.

Besonders bevorzugt ist eine Gestaltung, wonach bei geschlossenem Fahrzeugdach die Hebeleinrichtung bzw. die Hebel des Dachelements im wesentlichen vertikal in etwa im Bereich eines seitlichen Vorderrandes des Heckelements angeordnet sind. Dieser Vorderrand begrenzt gleichzeitig den Türausschnitt. Durch diese Anordnung wird die freie Sicht durch eine im Heckelement angeordnete Seitenscheibe nicht oder nur geringfügig beeinträchtigt. Außerdem wird der Verschwenkweg der Verdeckkastenabdeckung mit der Hutablage nicht beeinträchtigt und seitliche längliche Ausnehmungen in der Verdeckkastenabdeckung sind für die Hebel nicht erforderlich.

Gemäß einer weiteren bevorzugten Ausführungsform weist die Hebeleinrichtung zum Lagern des Heckelements einen am Dachelement gelagerten Lenker und einen weiteren Lenker auf, der mittels eines Stützlenkers an einem der beiden das Dachelement lagernden Hebel angelenkt ist. Gegenüber einer Viergelenkanordnung kann mittels des zusätzlichen Stützhebels ein verbessertes Bewegungsverhalten erzielt werden, insbesondere wenn eine Antriebseinrichtung vorgesehen ist, die den mit dem Stützlenker verbundenen Lenker und den das Dachelement lagernden Hebel koppelt und bei Betätigung den Abstand zwischen dem Lenker und dem Hebel zum Bewegen des Heckelements ändern kann.

Zweckmäßigerweise ist einer der das Dachelement lagernden Hebel und einer der das Heckelement lagernden Lenker am Dachelement gelagert und der Hebel legt in Abhängigkeit von seiner Schwenkstellung gegenüber dem Dachelement mittels einer Positioniereinrichtung die Schwenkstellung des das Heckelement lagernden Lenkers gegenüber dem Dachelement fest.

Eine einfach gestaltete betriebssichere Positioniereinrichtung enthält eine am Hebel angeordnete Kulisse und ein Betätigungselement, das mit dem Lenker verbunden ist und an der Kulisse zumindest über einen gewissen Schwenkbereich in Eingriff ist.

Zweckmäßigerweise ist der Stauraum für das Fahrzeugdach ein Verdeckkasten, der seitliche Begrenzungen und einen Verdeckkastenboden aufweisen kann.

Wenn ein Verdeckkastenboden hinter den Sitzen bei geschlossenem Fahrzeugdach entfernbar ist, so kann ein Nutz- oder Kofferraum vergrößert werden.

In einer bevorzugten Gestaltung sind die beiden Hebeleinrichtungen derart ausgelegt, daß beim Ablegen des Fahrzeugdaches zunächst das Heckelement über das Dachelement geschwenkt, dann eine Stauraum- bzw. Verdeckkastenabdeckung hochgeschwenkt, das Dachelement mit dem Heckelement in eine im wesentlichen waagrechte Anordnung in dem Stauraum bzw. Verdeckkasten abgelegt und die Stauraum- bzw. Verdeckkastenabdeckung wieder herabgeschwenkt wird.

Zweckmäßigerweise enthalten das Dachelement und das Heckelement jeweils einen eigenen Antrieb, jedoch kann auch ein gemeinsamer Antrieb für das Dachelement und das Heckelement vorgesehen sein.

Nachfolgend werden zwei Ausführungsbeispiele der Erfindung unter Bezugnahme auf die Zeichnungen näher erläutert. Es zeigt:
- Fig. 1: in einer Seitenansicht in schematischer Darstellung ein erstes Ausführungsbeispiel eines Hardtop-Fahrzeugdachs eines Cabriolets in geschlossener Stellung;
- Fig. 2: in einer Seitenansicht in schematischer Darstellung das Fahrzeugdach in einer ersten Zwischenöffnungsstellung;
- Fig. 3: in einer Seitenansicht in schematischer Darstellung das Fahrzeugdach in der ersten Zwischenöffnungsstellung mit geöffneter Verdeckkastenabdeckung;
- Fig. 4: in einer Seitenansicht in schematischer Darstellung das Fahrzeugdach in einer zweiten Zwischenöffnungsstellung;
- Fig. 5: in einer Seitenansicht in schematischer Darstellung das in dem Verdeckkasten abgelegte Fahrzeugdach;
- Fig. 6: in einer Seitenansicht in schematischer Darstellung das in dem Verdeckkasten abgelegte Fahrzeugdach mit geschlossener Verdeckkastenabdeckung;
- Fig. 7: in einer Seitenansicht in schematischer Darstellung ein zweites Ausführungsbeispiel des Hardtop-Fahrzeugdachs in geschlossener Stellung;
- Fig. 8: in einer Seitenansicht in schematischer Darstellung das Fahrzeugdach gemäß Fig. 7 in einer ersten Zwischenöffnungsstellung;
- Fig. 9: in einer Seitenansicht in schematischer Darstellung das Fahrzeugdach in der ersten Zwischenöffnungsstellung mit geöffneter Verdeckkastenabdeckung;
- Fig. 10: in einer Seitenansicht in schematischer Darstellung das Fahrzeugdach in einer zweiten Zwischenöffnungsstellung;
- Fig. 11: in einer Seitenansicht in schematischer Darstellung das in dem Verdeckkasten abgelegte Fahrzeugdach;
- Fig. 12: in einer Seitenansicht in schematischer Darstellung das in dem Verdeckkasten abgelegte Fahrzeugdach mit geschlossener Verdeckkastenabdeckung;
- Fig. 13: in vergrößerter Darstellung den das vordere Dachelement lagernden Hebelmechanismus;
- Fig. 14: in vergrößerter Darstellung den das vordere Dachelement lagernden Hebelmechanismus in der Stellung gemäß Fig. 8; und
- Fig. 15: in vergrößerter Darstellung den das vordere Dachelement lagernden Hebelmechanismus in der Stellung gemäß Fig. 10.

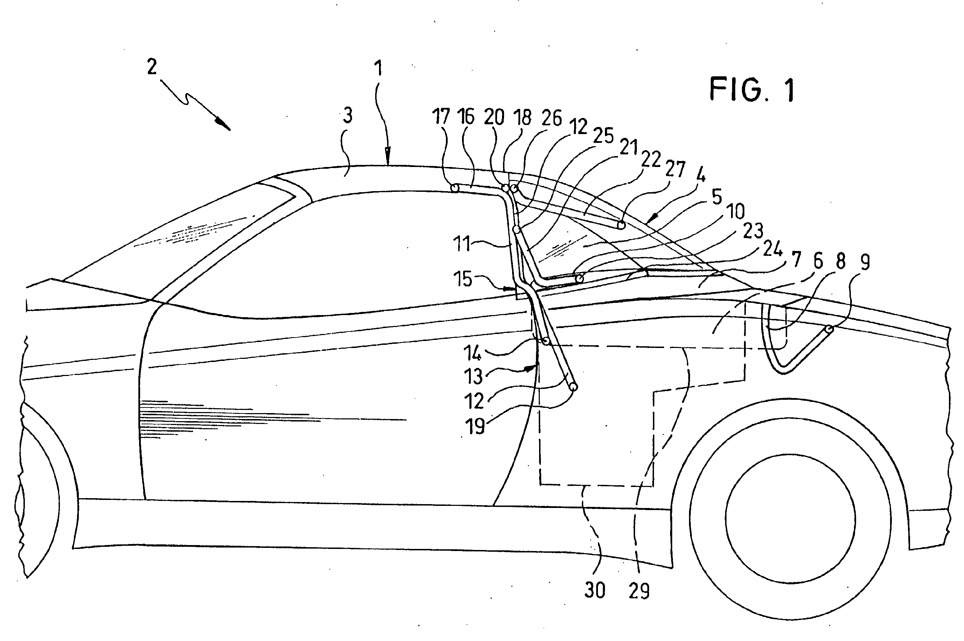

Ein Fahrzeugdach 1 eines Cabriolets 2 ist als umwandelbares Hardtop gestaltet (siehe Fig. 1 bis 6 des ersten Ausführungsbeispiels) und weist ein vorderes festes Dachelement 3 und ein hinteres festes Dach- oder Heckelement 4 auf, das eine hintere Seitenscheibe 5 enthält. Das Fahrzeugdach 1 ist zum Öffnen umwandelbar, indem das Dachelement 3 und das Heckelement 4 in einen Stauraum 6, der ein Verdeckkasten sein kann, hinter den Fahrzeugsitzen abgelegt wird. Der Stauraum 6 oder Verdeckkasten enthält eine Verdeckkastenabdeckung 7, die über einen Lenker 8 mit einem rückwärtigen Gelenk 9 an der Karosserie gelagert ist und aus ihrer den Verdeckkasten 6 abdeckenden Stellung hochklappbar ist (die Beschreibung des Fahrzeugdachs erfolgt anhand der dem Betrachter zugewandten, bezüglich des Fahrzeugs linksseitigen Lagereinrichtungen, wobei selbstverständlich auch die gegenüberliegende rechte Fahrzeugseite die entsprechenden Lagereinrichtungen aufweist). Bei geschlossenem Fahrzeugdach 1 liegt das Heckelement 4 auf der eine Hutablage 10 enthaltenden Verdeckkastenabdeckung 7 dicht auf (siehe Fig. 1).

Das vordere Dachelement 3 ist am Fahrzeug mittels einer Hebeleinrichtung schwenkbeweglich gelagert, die zwei eine Viergelenkanordnung bildende Hebel 11 und 12 aufweist. Der erste Hebel 11 der Hebeleinrichtung ist im Bereich des hinteren Türrahmens 13 innen an der Karosserie in einem unteren Gelenk 14 gelagert und in Schließstellung des Fahrzeugdaches 1 im wesentlichen vertikal entlang eines seitlichen Vorderrandes 15 des Heckelements 4 ausgerichtet, wobei der Hebel 11 an der Innenseite des Heckelements 4 z. B. hinter einer am seitlichen Vorderrand 15 des Heckelements 4 für eine Türseitenscheibe angebrachte Türdichtung angeordnet ist. Ein oberer Endabschnitt 16 des Hebels 11 ist an einer oberen Türdichtung am Seitenrand des Dachelements 3 nach vorne abgewinkelt und erstreckt sich bis zu einem Gelenk 17, das vom Hinterrand 18 des Dachelements 3 beabstandet ist. Der zweite Hebel 12 der Hebeleinrichtung ist an einem unteren Gelenk 19 gelagert, das seitlich an der Karosserie unterhalb des unteren Gelenks 14 des ersten Hebels 11 angeordnet ist. Der zweite Hebel 12 erstreckt sich in etwa neben dem ersten Hebel 11 aufwärts bis zu einem Gelenk 20 im Bereich des Hinterrands 18 des Dachelements 3. Die Positionen der Gelenke 14 und 17 sowie 19 und 20 der Hebel 11 bzw. 12 sind entsprechend des durch die Viergelenkanordnung erzielbaren Bewegungsverhaltens gewählt.

Das Heckelement 4 ist über eine Hebeleinrichtung mit zwei in Viergelenkanordnung gelagerten Lenkern 21 und 22 schwenkbeweglich gelagert, wobei der erste Lenker 21 z. B. abgewinkelt gebildet ist und sich von einem Gelenk 23 am seitlichen Unterrand 24 des Heckelements 4 nach vorne und am Vorderrand 15 nach oben bis zu einem Gelenk 25, das am zweiten Hebel 12 des Dachelements 3 angeordnet ist, erstreckt. Der zweite Lenker 22 ist einerseits an einem Gelenk 26 seitlich am Hinterrand 18 des Dachelements 3 und andererseits an einem Gelenk 27 am seitlichen Dachbereich des Heckelements 4 gelagert.

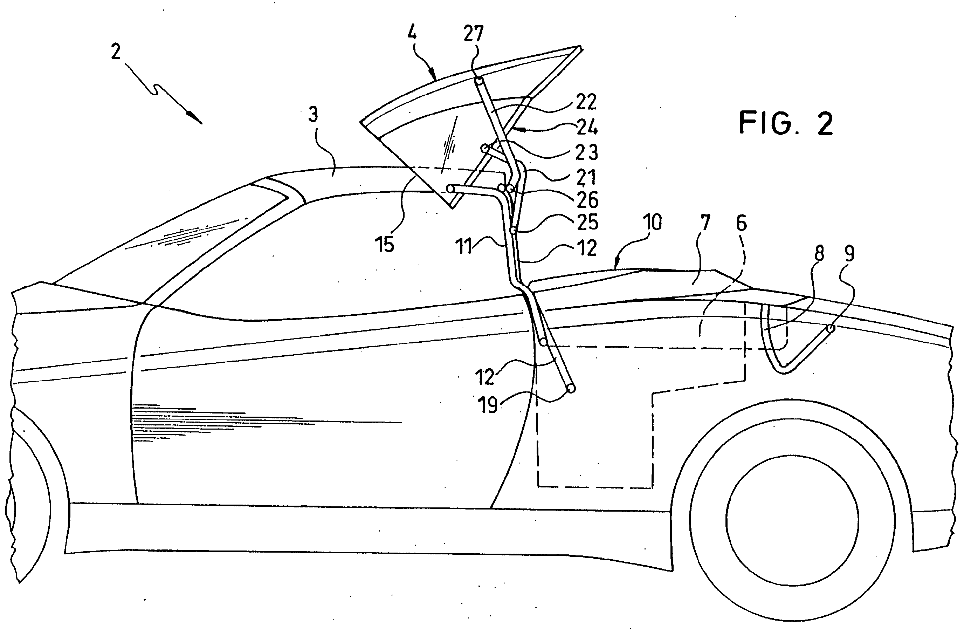

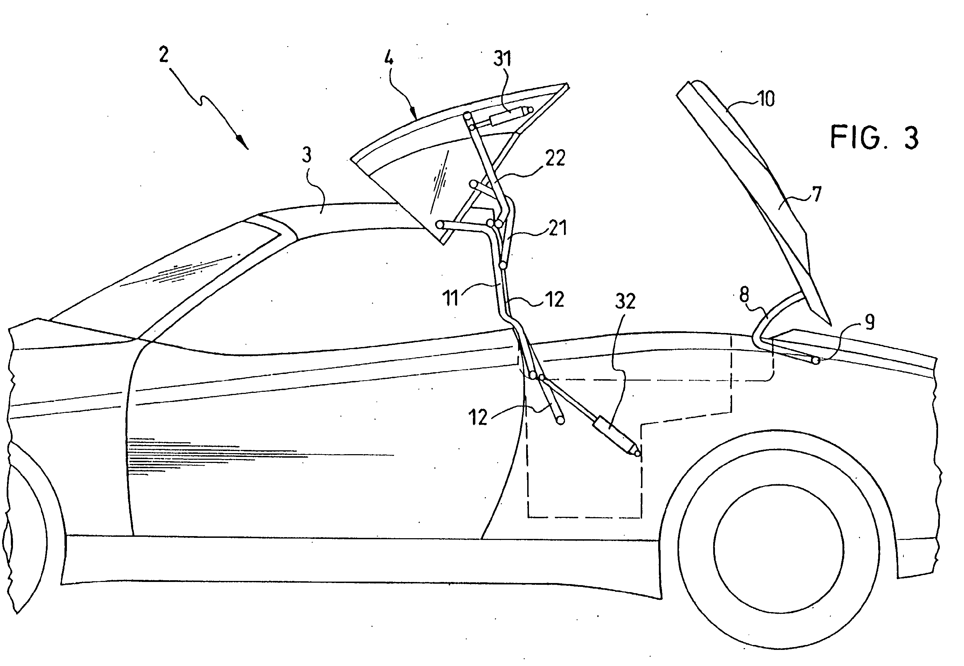

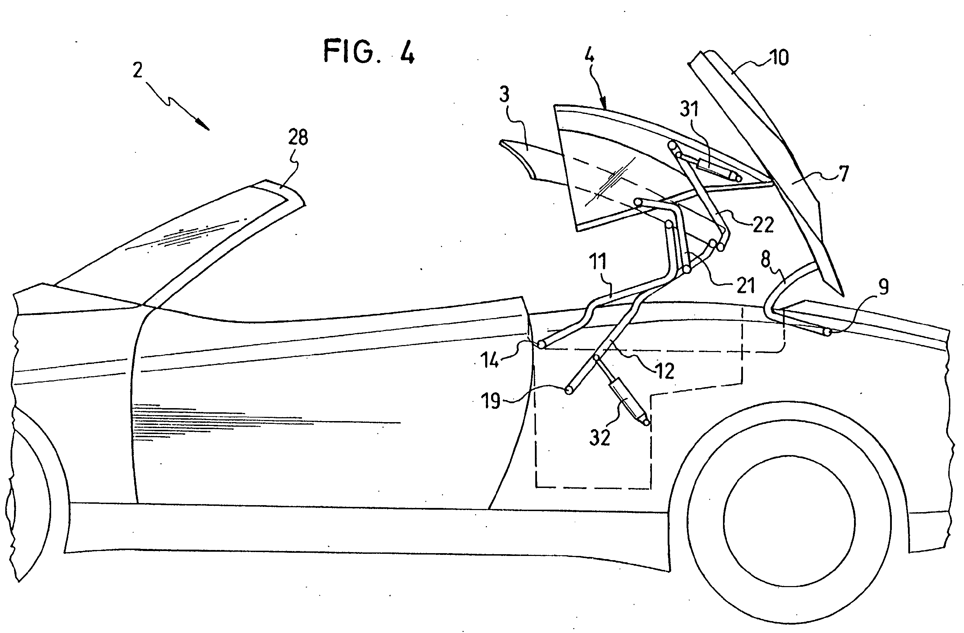

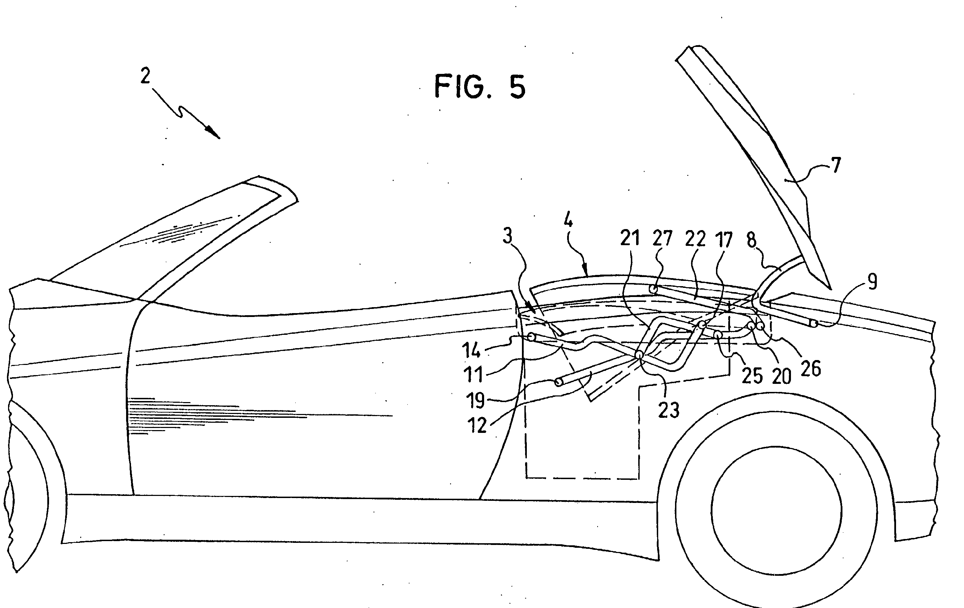

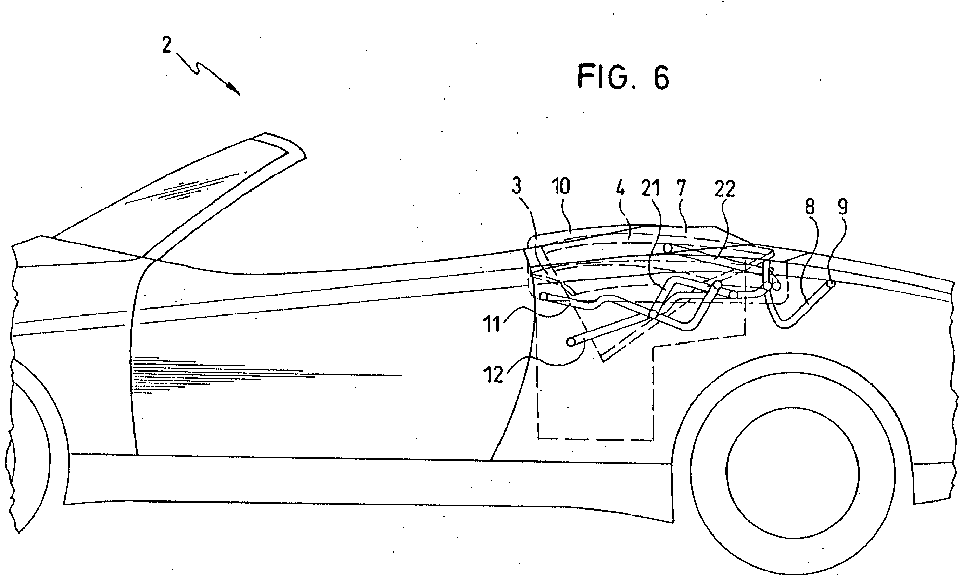

Zum Öffnen des Fahrzeugdaches 1 wird das Heckelement 4 durch eine Antriebseinrichtung 31 (in Fig. 3 schematisch dargestellt) aus seiner Schließstellung auf der Verdeckkastenabdeckung 7 (Fig. 1) in eine Zwischenstellung nach oben und nach vorne über das Dachelement 3 geschwenkt (Fig. 2). Die Antriebseinrichtung 31 ist beispielsweise eine hydraulisch betätigte Kolben-Zylindereinheit, die an dem Heckelement 4 verdeckt angeordnet ist und einerseits mit dem das Heckelement 4 lagernden Lenker 22 und andererseits mit dem Heckelement 4 verbunden ist. Nachdem das Heckelement 4 die in Fig. 2 dargestellte Position eingenommen hat, ist der Verschwenkweg für die Verdeckkastenabdeckung 7 frei, die mittels des Lenkers 8 um das Gelenk 9 hochgeklappt wird und somit den Stauraum 6 bzw. den Verdeckkasten nach oben hin freigibt (Fig. 3). Durch eine weitere Antriebseinrichtung 32 (in Fig. 3 schematisch dargestellt), die beispielsweise als eine hydraulisch betätigte Kolben-Zylindereinheit gebildet ist, die einerseits an dem das Dachelement 3 lagernden Hebel 12 angelenkt ist und sich andererseits an der Karosserie abstützt, wird das vordere Dachelement 3, nachdem es an seinem Vorderrand aus einem Riegeleingriff an einem Windfang 28 entriegelt worden ist, über seine beiden Hebel 11 und 12 nach hinten in Richtung zum Stauraum 6 verschwenkt und abgesenkt (Fig. 4), wobei zusammen mit der Bewegung des Dachelements 3 das Heckelement 4 mitgeführt wird, das sich wiederum aufgrund der Hebel- und Lenkerkinematik zum Dachelement 3 hin absenkt. In der Endschwenkposition ist das Dachelement in dem Verdeckkasten in im wesentlichen waagrechter Stellung abgelegt (Fig. 5). Das Heckelement 4 ist über seine Lenker 21 und 22 in raumsparender Anordnung eng benachbart auf dem Dachelement 3 abgelegt. Schließlich wird die Verdeckkastenabdeckung 7 wieder in ihre Abdecklage, in der sie das Dachelement 3 und das Heckelement 4 teilweise oder gänzlich abdeckt, auf dem Verdeckkasten 6 zurückgeklappt (Fig. 6). Damit befindet sich das Fahrzeugdach 1 des Cabriolets 2 in seiner Offenstellung. Das Schließen des Fahrzeugdaches 1 erfolgt in entgegengesetztem Bewegungsablauf.

Ein Verdeckkastenboden 29 des Verdeckkastens 6 kann entnehmbar gebildet sein, so daß bei geschlossenem Fahrzeugdach ein unterhalb des Verdeckkastens 6 angeordneter Nutzraum 30 (in Fig. 1 durch unterbrochene Linie schematisch dargestellt) über den Verdeckkasten 6 zugänglich ist.

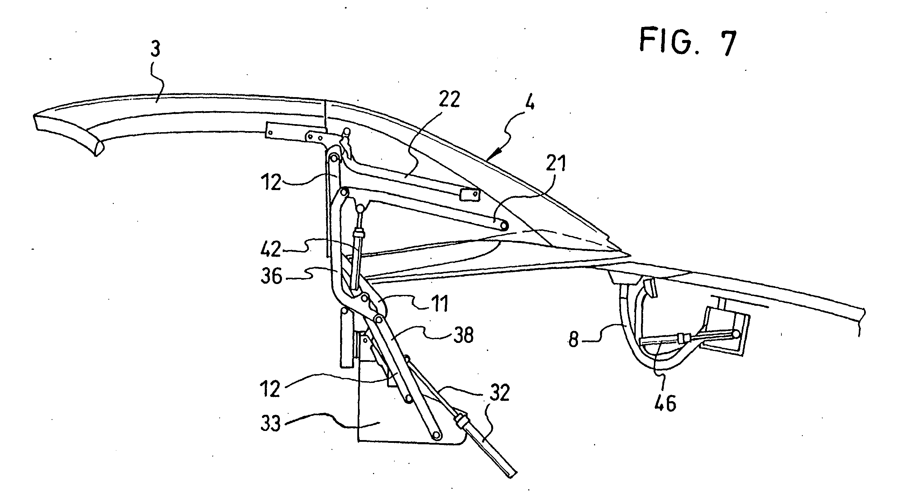

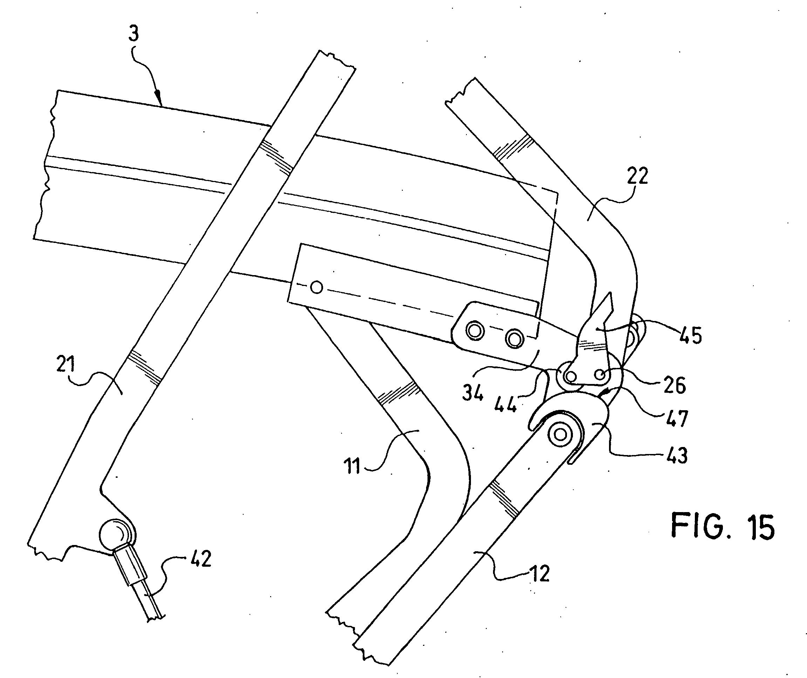

Ein zweites Ausführungsbeispiel des Fahrzeugdaches 1 (siehe Fig. 7 bis 15) enthält eine gegenüber dem ersten Ausführungsbeispiel abgeänderte Lagereinrichtung für das hintere Dach- oder Heckelement 4. Das vordere Dachelement 3 ist entsprechend dem ersten Ausführungsbeispiel über die beiden Hebel 11 und 12 an einem karosseriefesten Hauptlager 33 mittels der Gelenke 14 bzw. 19 bewegbar gelagert und mittels der am Hebel 12 angreifenden und sich an der Karosserie abstützenden Antriebseinrichtung 32, z. B. einer hydraulischen Kolben-Zylinder-Einheit, verschwenkbar.

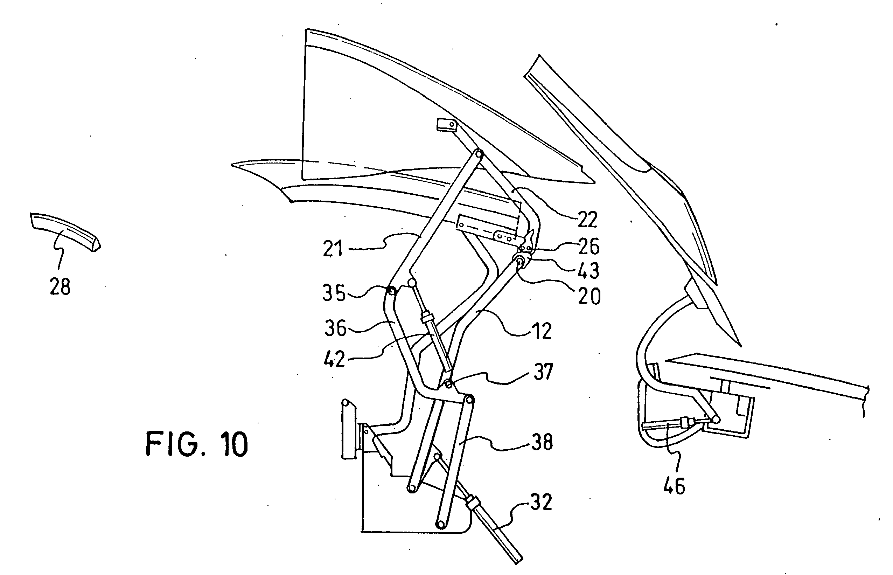

Das Heckelement 4 ist über den Lenker 21 und den Lenker 22 der Viergelenkanordnung bewegbar gelagert. Dabei ist der zweite Lenker 22 entsprechend dem ersten Ausführungsbeispiel einerseits mittels des Gelenks 26 seitlich an einem am Hinterrand 18 des Dachelements 3 angebrachten Trägerteil 34 und andererseits mittels des Gelenks 27 am seitlichen Dachbereich des Heckelements 4 gelagert. Der erste Lenker 21 ist einerseits mittels eines Gelenks 35 mit einem Stützlenker 36 schwenkbar verbunden, der wiederum mittels eines Gelenks 37 an dem das vordere Dachelement 3 lagernden Hebel 12 schwenkbar gelagert ist. Des weiteren ist ein Steuerlenker 38 einerseits mittels eines Gelenks 39 an einem über das Gelenk 37 hinausstehenden Endabschnitt 40 des Stützlenkers 36 und andererseits an einer karosseriefesten Anlenkung 41, die beispielsweise an dem Hauptlager 33 angeordnet ist, angelenkt. Eine Antriebseinrichtung 42, z. B. eine hydraulische Kolben-Zylinder-Einheit, verbindet den Hebel 12 mit dem ersten Lenker 21 (siehe Fig. 10).

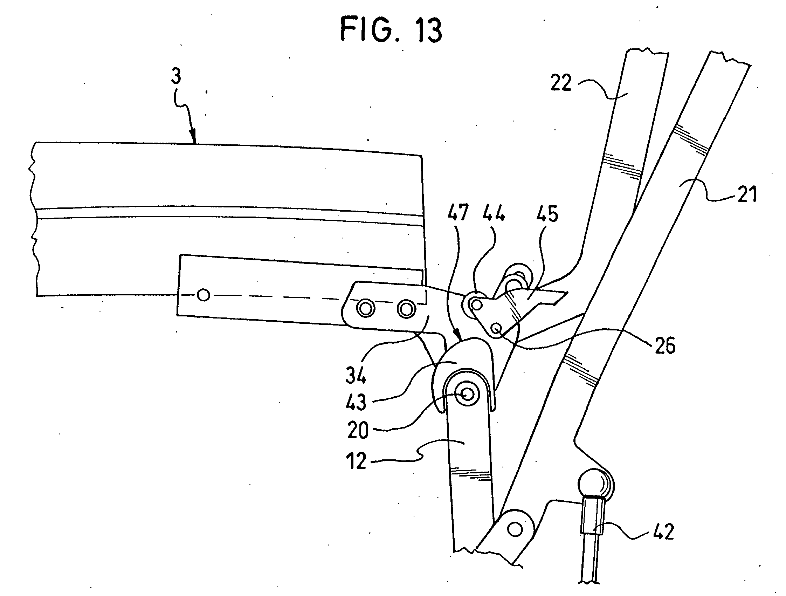

Der Hebel 12 enthält an seinem vom Gelenk 20 gelagerten Ende eine Kulisse 43 (siehe insbesondere Fig. 10 und 13), auf der eine Rolle 44 abrollt, die an einem mit dem Lenker 22 fest verbundenen Lagerteil 45 gelagert ist.

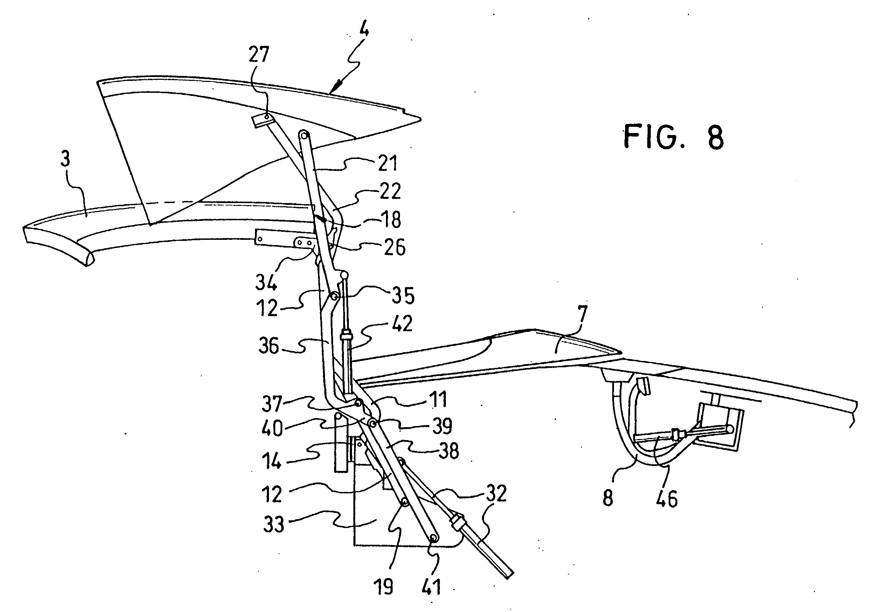

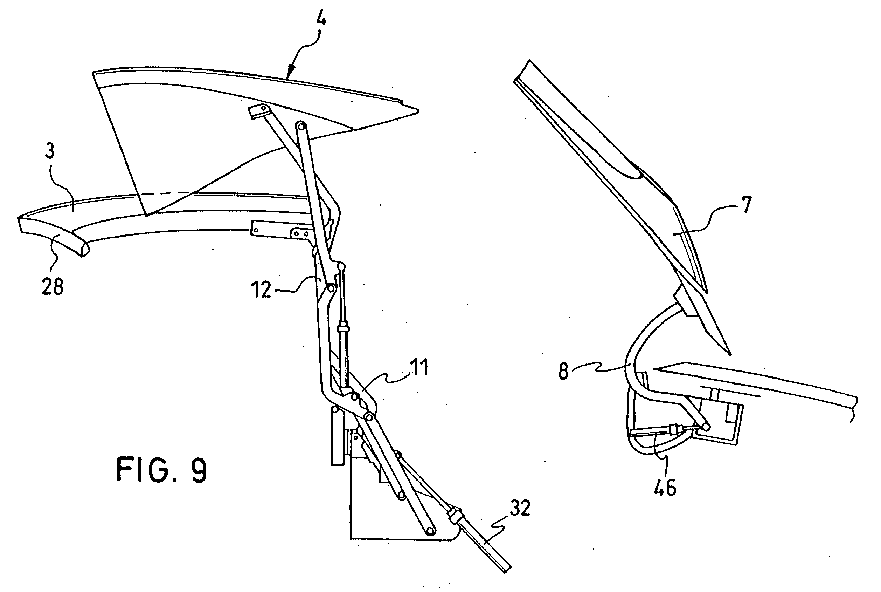

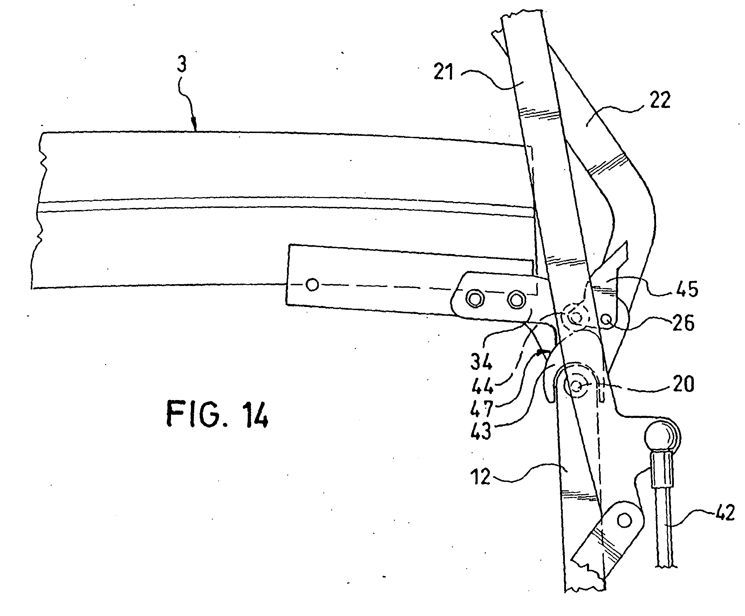

Zum Öffnen des Fahrzeugdaches 1 wird zunächst das Heckelement 4 durch eine Antriebseinrichtung 42 aus seiner Schließstellung auf der Verdeckkastenabdeckung 7 (Fig. 7) in eine Zwischenstellung nach oben und nach vorne über das Dachelement 3 geschwenkt (Fig. 8), wobei eine hydraulische Kolben-Zylindereinheit der Antriebseinrichtung 42 mit Druck beaufschlagt wird und die Kolbenstange aus dem Zylinder ausfährt. Nachdem das Heckelement 4 die in Fig. 8 dargestellte Position eingenommen hat, wird die Verdeckkastenabdeckung 7 mittels des von einer Antriebseinrichtung 46 antreibbaren Lenkers 8 hochgeklappt und gibt somit den Stauraum 6 bzw. den Verdeckkasten nach oben hin frei (Fig. 9). Durch die hydraulische Kolben-Zylindereinheit der Antriebseinrichtung 32 wird das vordere Dachelement 3, nachdem es an seinem Vorderrand aus einem Riegeleingriff an dem Windfang 28 entriegelt worden ist, über seine beiden Hebel 11 und 12 nach hinten in Richtung zum Stauraum 6 verschwenkt und abgesenkt (Fig. 10), wobei gleichzeitig die hydraulische Kolben-Zylindereinheit der Antriebseinrichtung 42 derart frei geschaltet ist, daß der Kolben von dem Hebel 12 und dem Lenker 21, die sich bei ihrer Bewegung annähern, in den Zylinder geschoben werden kann. Die Positionierung des Heckelements 4 an dem Dachelement 3 wird durch eine Positioniereinrichtung unterstützt, die von der Kulisse 43 und der auf einer Kulissenbahn 47 der Kulisse 43 abrollenden Rolle 44 gebildet ist (siehe Fig. 13 bis 15), indem beim rückwärts gerichteten Verschwenken der beiden Hebel 11 und 12 sich die Schwenkstellung des Hebels 12 gegenüber dem Trägerteil 34 und damit dem Gelenk 26 ändert. Der jeweilige Abstand zwischen der Kulissenbahn 47 und dem Gelenk 26 ändert sich bei dieser Bewegung, so daß die auf einer Kreisbahn um das Gelenk 26 geführte Rolle 44, die ab einer bestimmten Schwenkstellung (Fig. 14) sich an die Kulissenbahn anlegt und auf ihr abläuft, die jeweilige Schwenkstellung des Lenkers 22 bezüglich des Dachelements 3 in Abhängigkeit von seiner Position bestimmt.

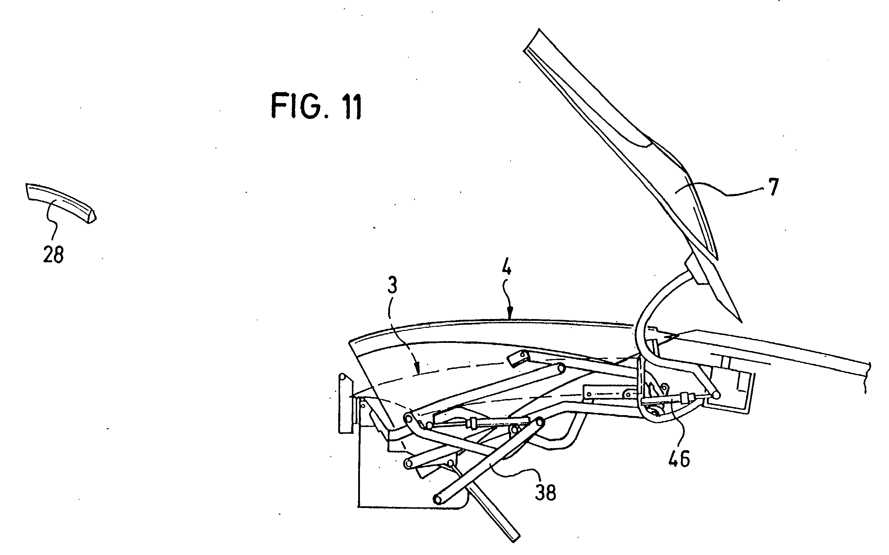

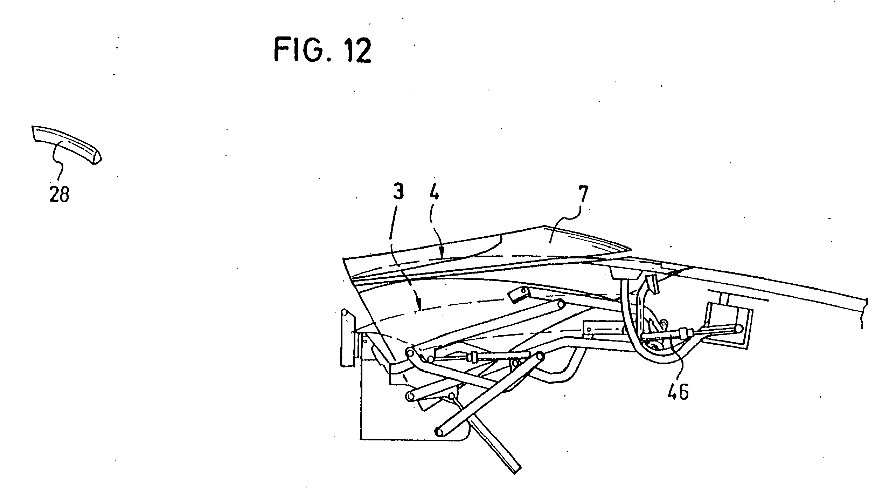

In der Endschwenkposition ist das Dachelement 3 in dem Verdeckkasten 6 abgelegt (Fig. 11) und die Verdeckkastenabdeckung 7 wird wieder in ihre Abdecklage zurückgeklappt (Fig. 12), indem die Antriebseinrichtung 46 den Lenker 8 verschwenkt. Damit befindet sich das Fahrzeugdach 1 des Cabriolets 2 in seiner Offenstellung. Das Schließen des Fahrzeugdaches 1 erfolgt in entgegengesetztem Bewegungsablauf.

### Bezugszeichenliste

- 1: Fahrzeugdach
- 2: Cabriolet
- 3: Dachelement
- 4: Heckelement
- 5: Seitenscheibe
- 6: Stauraum
- 7: Verdeckkastenabdeckung
- 8: Lenker
- 9: Gelenk
- 10: Hutablage
- 11: erster Hebel
- 12: zweiter Hebel
- 13: hinterer Türrahmen
- 14: Gelenk
- 15: Vorderrand
- 16: Endabschnitt
- 17: Gelenk
- 18: Hinterrand
- 19: Gelenk
- 20: Gelenk
- 21: Lenker
- 22: Lenker
- 23: Gelenk
- 24: Unterrand
- 25: Gelenk
- 26: Gelenk
- 27: Gelenk
- 28: Windfang
- 29: Verdeckkastenboden
- 30: Nutzraum
- 31: Antriebseinrichtung
- 32: Antriebseinrichtung
- 33: Hauptlager
- 34: Trägerteil
- 35: Gelenk
- 36: Stützlenker
- 37: Gelenk
- 38: Steuerlenker
- 39: Gelenk
- 40: Endabschnitt
- 41: Anlenkung
- 42: Antriebseinrichtung
- 43: Kulisse
- 44: Rolle
- 45: Lagerteil
- 46: Antriebseinrichtung
- 47: Kulissenbahn

## Patentansprüche

1. Umwandelbares Fahrzeugdach (1) mit einem ein- oder mehrteiligen vorderen Dachelement (3) und einem hinteren Heckelement (4), bei dem das vordere Dachelement (3) mittels einer Hebeleinrichtung (11, 12) an der Karosserie schwenkbar gelagert ist und wobei beim Ablegen des Fahrzeugdaches (1) das Heckelement (4) über das ruhende vordere Dachelement (3) verschwenkt und gemeinsam mit diesem in einen rückwärtigen Stauraum (6) abgesenkt wird,
**dadurch gekennzeichnet,**
**dass** das Heckelement (4) an dem Dachelement (3) und/oder an der das Dachelement (3) lagernden Hebeleinrichtung (11, 12), die zwei einen Viergelenkmechanismus bildende und das Dachelement (3) unmittelbar an der Karosserie lagernde Hebel (11 und 12) aufweist, gelagert ist und wobei das Heckelement (4) nicht unmittelbar an der Karosserie schwenkbar gelagert ist.

2. Fahrzeugdach nach Anspruch 1,
**dadurch gekennzeichnet, dass** das Heckelement (4) mittels einer weiteren Hebeleinrichtung (21, 22) gelagert ist.

3. Fahrzeugdach nach Anspruch 2,
**dadurch gekennzeichnet, dass** die weitere Hebeleinrichtung zum Lagern des Heckelements (4) zwei einen Viergelenkmechanismus bildende Lenker (21, 22) aufweist.

4. Fahrzeugdach nach Anspruch 3,
**dadurch gekennzeichnet, dass** der eine Lenker (22) am Dachelement (3) und der andere Lenker (21) an einem der beiden das Dachelement (3) lagernden Hebel (12) angelenkt ist.

5. Fahrzeugdach nach einem der Ansprüche 1 bis 4,
**dadurch gekennzeichnet, dass** bei geschlossenem Fahrzeugdach (1) die Hebeleinrichtung (11, 12) des Dachelements (3) im Bereich eines seitlichen Vorderrandes (15) des Heckelements (4) in etwa vertikal angeordnet ist.

6. Fahrzeugdach nach Anspruch 1 oder 2,
**dadurch gekennzeichnet, dass** die Hebeleinrichtung zum Lagern des Heckelements (4) einen am Dachelement (3) gelagerten Lenker (22) und einen Lenker (21) aufweist, der mittels eines Stützlenkers (36) an einem der beiden das Dachelement (3) lagernden Hebel (12) angelenkt ist.

7. Fahrzeugdach nach Anspruch 6,
**dadurch gekennzeichnet, dass** eine Antriebseinrichtung (42), die den mit dem Stützlenker (36) verbundenen Lenker (21) und den das Dachelement (3) lagernden Hebel (12) koppelt, zum Verändern des Abstandes zwischen dem Lenker (21) und dem Hebel (12) vorgesehen ist.

8. Fahrzeugdach nach Anspruch 6 oder 7,
**dadurch gekennzeichnet, dass** einer der das Dachelement (3) lagernden Hebel (12) und einer der das Heckelement (4) lagernden Lenker (22) am Dachelement (3) gelagert sind und dass der Hebel (12) in Abhängigkeit von seiner Schwenkstellung gegenüber dem Dachelement (3) mittels einer Positioniereinrichtung (43, 44) die Schwenkstellung des das Heckelement (4) lagernden Lenkers (22) gegenüber dem Dachelement (3) festlegt.

9. Fahrzeugdach nach Anspruch 8,
**dadurch gekennzeichnet, dass** die Positioniereinrichtung eine am Hebel (12) angeordnete Kulisse (43) und ein Betätigungselement (44) aufweist, das mit dem Lenker (22) verbunden ist und an der Kulisse (43) in Eingriff ist.

10. Fahrzeugdach nach einem der Ansprüche 1 bis 9,
**dadurch gekennzeichnet, dass** der Stauraum (6) für das Fahrzeugdach (1) ein Verdeckkasten ist, wobei zur Vergrößerung eines Nutzraumes (30) hinter den Sitzen bei geschlossenem Fahrzeugdach (1) ein Verdeckkastenboden (29) entfernbar ist.

11. Fahrzeugdach nach einem der Ansprüche 2 bis 10,
**dadurch gekennzeichnet, dass** die beiden Hebeleinrichtungen (11, 12 und 21, 22) derart ausgelegt sind, dass beim Ablegen des Fahrzeugdaches (1) zunächst das Heckelement (4) über das Dachelement (3) geschwenkt, dann eine Stauraum- bzw. Verdeckkastenabdeckung (7) hochgeschwenkt, das Dachelement (3) mit dem Heckelement (4) in eine im wesentlichen waagrechte Anordnung in dem Stauraum bzw. Verdeckkasten (6) abgelegt und die Stauraum- bzw. Verdeckkastenabdeckung (7) wieder herabgeschwenkt wird.

12. Fahrzeugdach nach einem der Ansprüche 1 bis 11,
**dadurch gekennzeichnet, dass** das Dachelement (3) und das Heckelement (4) jeweils einen eigenen Antrieb (32 bzw. 31 oder 42) aufweisen oder dass ein gemeinsamer Antrieb für das Dachelement (3) und das Heckelement (4) vorgesehen ist.

## Claims

1. Convertible vehicle roof (1) having a one-piece or multi-part front roof element (3) and a rear roof element (4), in which the front roof element (3) is mounted on the bodywork by means of a lever device (11, 12) such that it can be pivoted and, when the vehicle roof (1) is let down, the rear roof element (4) is pivoted over the stationary front roof element (3) and, together with the latter, is lowered into a rear stowage space (6),
**characterized in that**
the rear roof element (4) is mounted on the roof element (3) and/or on the lever device (11, 12) which supports the roof element (3) and which has two levers (11 and 12) which form a four-bar mechanism and support the roof element (3) directly on the bodywork, and the rear roof element (4) not being pivotably mounted directly on the bodywork.

2. Vehicle roof according to Claim 1, **characterized in that** the rear roof element (4) is mounted by means of a further lever device (21, 22).

3. Vehicle roof according to Claim 2, **characterized in that** the further lever device for mounting the rear roof element (4) has two links (21, 22) forming a four-bar mechanism.

4. Vehicle roof according to Claim 3, **characterized in that** the one link (22) is attached to the roof element (3) and the other link (21) is attached to one of the two levers (12) supporting the roof element (3).

5. Vehicle roof according to one of Claims 1 to 4, **characterized in that** when the vehicle roof (1) is closed, the lever device (11, 12) of the roof element (3) is arranged approximately vertically in the region of a lateral front edge (15) of the rear roof element (4).

6. Vehicle roof according to Claim 1 or 2, **characterized in that** the lever device for supporting the rear roof element (4) has a link (22) mounted on the roof element (3) and a link (21) which is attached by means of a supporting link (36) to one of the two levers (12) supporting the roof element (3).

7. Vehicle roof according to Claim 6, **characterized in that** a drive device (42), which couples the link (21) connected to the supporting link (36) and the lever (12) supporting the roof element (3), is provided in order to change the distance between the link (21) and the lever (12).

8. Vehicle roof according to Claim 6 or 7, **characterized in that** one of the levers (12) supporting the roof element (3) and one of the links (22) supporting the rear roof element (4) are mounted on the roof element (3), and **in that**, by means of a positioning device (43, 44) and depending on its pivoted position with respect to the roof element (3), the lever (12), defines the pivoted position with respect to the roof element (3) of the link (22) supporting the rear roof element (4).

9. Vehicle roof according to Claim 8, **characterized in that** the positioning device has a guide block (43) arranged on the lever (12) and an actuating element (44), which is connected to the link (22) and is in engagement with the guide block (43).

10. Vehicle roof according to one of Claims 1 to 9, **characterized in that** the stowage space (6) for the vehicle roof (1) is a hood box, it being possible for a hood box base (29) to be removed in order to enlarge a usable space (30) behind the seats when the vehicle roof (1) is closed.

11. Vehicle roof according to one of Claims 2 to 10, **characterized in that** the two lever devices (11, 12 and 21, 22) are designed in such a way that, when the vehicle roof (1) is let down, firstly the rear roof element (4) is pivoted over the roof element (3), a stowage space cover or hood box cover (7) is then pivoted up, the roof element (3) with the rear roof element (4) is let down into a substantially horizontal arrangement in the stowage space or hood box (6), and the stowage space cover or hood box cover (7) is pivoted down again.

12. Vehicle roof according to one of Claims 1 to 11, **characterized in that** the roof element (3) and the rear roof element (4) in each case have an individual drive (32 and 31 or 42) or **in that** a common drive is provided for the roof element (3) and the rear roof element (4).

## Revendications

1. Toit de véhicule transformable (1) comprenant un élément de toit avant (3) en une ou plusieurs parties et un élément arrière (4), dont l'élément de toit avant (3) est monté de façon pivotante sur la carrosserie au moyen d'un dispositif à leviers (11, 12), sachant que lors de l'ouverture du toit de véhicule (1), l'élément arrière (4) pivote pour venir se placer au-dessus l'élément de toit avant (3), et l'ensemble s'escamote ensuite dans un espace de rangement arrière (6), **caractérisé en ce que** l'élément arrière (4) est monté sur l'élément de toit (3) et/ou sur le dispositif à leviers (11, 12) qui reçoit en montage l'élément de toit (3) et qui présente des leviers (11 et 12) directement montés sur la carrosserie, sachant également que l'élément arrière (4) n'est pas directement monté de façon pivotante sur la carrosserie.

2. Toit de véhicule selon la revendication 1, **caractérisé en ce que** l'élément arrière (4) est supporté par un dispositif à leviers (21, 22) supplémentaire.

3. Toit de véhicule selon la revendication 2, **caractérisé en ce que** le dispositif à leviers supplémentaire destiné à supporter l'élément arrière (4) présente deux bras articulés (21, 22) formant un quadrilatère articulé.

4. Toit de véhicule selon la revendication 3, **caractérisé en ce que** l'un des bras articulés (22) est relié de façon pivotante à l'élément de toit (3) et l'autre bras articulé (21) à l'un des deux leviers (12) supportant l'élément de toit (3).

5. Toit de véhicule selon l'une des revendications 1 à 4, **caractérisé en ce que**, lorsque le toit de véhicule (1) est fermé, le dispositif à leviers (11, 12) de l'élément de toit (3) est disposé approximativement verticalement dans la zone d'un bord avant latéral (15) de l'élément arrière (4).

6. Toit de véhicule selon la revendication 1 ou 2, **caractérisé en ce que** le dispositif à leviers destiné à supporter l'élément arrière (4) présente un bras articulé (22) relié à l'élément de toit (3) et un bras articulé (21) relié de manière articulée, au moyen d'un bras articulé de soutien (36), à l'un des deux leviers (12) supportant l'élément de toit (3).

7. Toit de véhicule selon la revendication 6, **caractérisé en ce qu'**est prévu un dispositif de commande (42) accouplant le bras articulé (21) relié au bras articulé de soutien (36) et le levier (12) supportant l'élément de toit (3), pour modifier l'écart entre le bras articulé (21) et le levier (12).

8. Toit de véhicule selon la revendication 6 ou 7, **caractérisé en ce que** l'un des leviers (12) supportant l'élément de toit (3) et l'un des bras articulés (22) supportant l'élément arrière (4) sont montés sur l'élément de toit (3), et **en ce qu'**en fonction de sa position de pivotement par rapport à l'élément de toit (3), le levier (12) bloque la position de pivotement du bras articulé (22) supportant l'élément arrière (4), au moyen d'un dispositif de positionnement (43, 44).

9. Toit de véhicule selon la revendication 8, **caractérisé en ce que** le dispositif de positionnement présente une coulisse (43) disposée sur le levier (12) et un élément d'actionnement (44) relié au bras articulé (22) et en prise avec la coulisse (43).

10. Toit de véhicule selon l'une des revendications 1 à 9, **caractérisé en ce que** l'espace de rangement (6) pour le toit de véhicule (1) est un compartiment à capote, sachant que pour agrandir un espace utile (30) derrière les sièges lorsque le toit de véhicule (1) est fermé, un fond de compartiment à capote (29) peut être retiré.

11. Toit de véhicule selon l'une des revendications 2 à 10, **caractérisé en ce que** les deux dispositifs à leviers (11, 12 et 21, 22) sont conçus de manière à ce qu'en ouvrant le toit de véhicule (1), l'élément arrière (4) pivote en premier lieu pour venir se placer au-dessus de l'élément de toit (3), puis un capot d'espace de rangement ou de compartiment à capote (7) se relève en pivotant, avant que l'élément de toit (3) et l'élément arrière (4) ne se rangent dans l'espace de rangement ou compartiment à capote (6) et que le capot d'espace de rangement ou de compartiment à capote (7) ne se rabatte à nouveau en pivotant.

12. Toit de véhicule selon l'une des revendications 1 à 11, **caractérisé en ce que** l'élément de toit (3) et l'élément arrière (4) présentent chacun une commande propre (32 et 31 respectivement, ou 42), ou **en ce qu'**est prévue une commande commune à l'élément de toit (3) et à l'élément arrière (4).
